# EUROPÄISCHE PATENTSCHRIFT

(11) **EP 0 585 429 B1**
(45) Veröffentlichungstag und Bekanntmachung des Hinweises auf die Patenterteilung: **08.05.1996**
(21) Anmeldenummer: 93905138.9
(22) Anmeldetag: 19.03.1993
(51) Int. Cl.: B24B 19/18, B24B 47/06, B23Q 5/34, B23Q 1/28, B23Q 11/00

(54) **VORRICHTUNG ZUM SCHLEIFEN VON GARNITUREN BEISPIELSWEISE EINER KARDEN- ODER REINIGUNGSTROMMEL**
DEVICE FOR GRINDING LININGS, E.G. OF A CARDING OR CLEANING DRUM
DISPOSITIF POUR MEULER DES GARNITURES, PAR EXEMPLE CELLES DU TAMBOUR D'UNE MACHINE A LAINER OU D'UNE MACHINE A NETTOYER

(30) Priorität: 19.03.1992 CH 881/92
(43) Veröffentlichungstag der Anmeldung: 09.03.1994
(73) Patentinhaber: MASCHINENFABRIK RIETER AG, CH-8406 Winterthur (CH)
(72) Erfinder: FAAS, Jürg, CH-8474 Dinhard (CH); DEMUTH, Robert, CH-8309 Nürensdorf (CH); SAUTER, Christian, CH-8247 Flurlingen (CH)
(86) Internationale Anmeldenummer: CH9300077
(87) Internationale Veröffentlichungsnummer: WO9318888

(56) Entgegenhaltungen:
- EP-A- 0 322 637
- EP-A- 0 448 485
- DE-A- 2 365 924
- PATENT ABSTRACTS OF JAPAN vol. 13, no. 234 (M-832)(3582) 30. Mai 1989 & JP-A-145 544 (HITACHI SEIKI Co.) 20 February 1989

## Beschreibung

Die Erfindung betrifft eine Vorrichtung zum Schleifen von Garnituren einer Karden- oder Reinigungstrommel, wie dies im Oberbegriff des ersten Anspruches aufgeführt ist.

An einer Karde wird die Auflösewalze (auch Briseurwalze genannt), der Tambour (auch Hauptwalze genannt), die Abnehmerwalze (auch Dofferwalze genannt) sowie der Wanderdeckel je mit Garnituren beschickt, welche allerdings unterschiedlich sein können, insbesondere was den Wanderdeckel betrifft, welcher auch mit einer Nadelgarnitur gegenüber einer Zahngarnitur der übrigen Elemente beschickt werden kann.

Die Leistungssteigerung in der Putzerei und Karderie einer Spinnerei, in den letzten 15 Jahren, hat mehr als nur proportional zum Durchsatz auch die Ansprüche an die Qualität der Maschinen erhöht.

Insbesondere steht die Bestrebung im Vordergrund, trotz Leistungssteigerung keine Qualitätseinbusse im Fasermaterial, insbesondere keine zusätzliche Beschädigung der Fasern, in Kauf nehmen zu müssen.

Im weiteren ist die Standdauer der "Werkzeuge" bei erhöhter Produktionsleistung ein wesentliches Kriterium. Die Standzeit eines Werkzeuges wird bei höherer Leistung entsprechend kürzer, was normalerweise das frühere Auswechseln des Werkzeuges zur Folge hat.

Die vorerwähnte Standzeit hat jedoch nicht nur in bezug auf den Bedienungsaufwand im Zusammenhang mit dem Wechseln des Werkzeuges eine Bedetung, sondern vielmehr im Zusammenhang mit dem veränderten technologischen Resultat, welches sich ebenfalls mit dem Abnützen eines Werkzeuges entsprechend verändert.

Wie in anderen Gebieten, wo Produkte am laufenden Band mit vorgegebenen Einstellungen verarbeitet werden, ist es auch in bezug auf das technologische Resultat in der Spinnerei wesentlich, dass diese Resultate möglichst gleichmässig anfallen. Mit anderen Worten, Qualitätsschwankungen sind für die Weiterverarbeitung von Garn infolge wechselhafter Störanfälligkeit sehr unerwünscht. Mit anderen Worten, eine gleichmässige, etwas schwächere Qualität ist einer durchschnittlich etwas höheren Qualität vorzuziehen, welche sich aus Höhen und Tiefen zusammensetzt.

Ein Werkzeug, welches in der Spinnerei dem vorgenannten Abnutzungsgesetz besonders unterworfen ist, ist die Zahn-Garnitur, welche vom Oeffnen der Faserflocken bis zum Kardieren verwendet wird.

Insbesondere ist die Karde, welche letztlich das auf die Strecke zu liefernde Kardenband erzeugt, die letzte Maschine, welche mit einem solchen Werkzeug arbeitet, d.h. die letzte Gelegenheit, Schwankungen vorgenannter Art zu vermeiden.

Es ist an sich bekannt, dass bspw. Kardengarnituren nach einer vorgegebenen maximalen Abnutzung ausgewechselt werden müssen, dass jedoch in der Zwischenzeit, bis diese maximale Abnutzung eintrifft, die Garnituren mit allen möglichen, auf dem Markte erhältlichen Schleifvorrichtungen geschliffen werden. Zu diesem Zweck muss die Karde nicht nur stillgesetzt, sondern auch teilweise demontiert werden, um mit einem Schleifwerkzeug an eine solche Garnitur heranzukommen.

Von der Anmelderin ist mit der Europäischen Patentanmeldung Nr. 0322637 ein Verfahren und eine Vorrichtung für das Schleifen von Kardengarnituren veröffentlicht, in welcher das Schleifen der Garnituren während des Kardierens erfolgt, und zwar kontinuierlich, so dass das Schleifen der Garnituren vor dem Auswechseln nicht mehr mit dem Stillstand oder der teilweisen Demontage der Karde in Zusammenhang steht.

Die vorgenannte Vorrichtung besteht aus einem über die ganze Breite der Garniturwalzen bewegbaren Schleifelement, welches in einem in Führungen geführten Mitnehmer aufgenommen und mit vorgegeben beispielsweise zeitlichen, von den Produktionsleistungen und/oder Qualitätsmerkmalen abhängigen Abständen kontinuierlich über die Garnitur gezogen wird. Dabei stört es nicht, dass die Garnituren mit einer Faserschicht belegt sind.

Erfahrungsgemäss nützt sich jedoch auch ein solches Schleifelement, welches in der Regel aus einem Schleifstein besteht, ab, das heisst es verliert an Schärfe, so dass ein solches Schieifelement von Zeit zu Zeit entfernt werden muss, um entweder ersetzt oder neu aufgerauht bzw. geschärft zu werden.

Dieser Nachteil behebt eine Erfindung derselben Anmelderin, die in der erst im Prioritätszeitraum veröffentlichten EP-A-0497736 beschrieben ist, dadurch, dass Schärfmittel an der Karde vorgesehen sind, welche das Schleifelement mindestens nach jedem zweiten Durchgang aufrauhen bzw. schärfen, so dass in Kombination mit dem Schleifen der Garnitur nicht nur die Garnitur sondern auch der Schleifstein resp. das Schleifelement eine Nachschärfung während des Betriebes erfährt.

Die Aufgabe der jetzigen Erfindung bestand darin eine Möglichkeit zu finden um zu vermeiden, dass Fasern in die Schleifvorrichtung eindringen können. Die Aufgabe wurde mit den im Kennzeichen des 1. Anspruches aufgeführten Merkmalen gelöst.

Ausführungsformen im Zusammenhang mit der Schleifvorrichtung sind aus den weiteren Ansprüchen zu entnehmen.

Nachdem die letztgenannte Anmeldung nicht vorveröffentlicht ist, wird deren Inhalt anhand der nachfolgenden Figuren 1 bis 13 gezeigt und beschrieben.

Die Erfindung wird anhand von Ausführungsbeispielen unter Zuhilfenahme der Figuren 14 bis 16 näher erläutert.

Es zeigt:
- Fig. 1: einen Querschnitt durch eine Vorrichtung, gemäss den Schnittlinien II (Fig. 2), halbschematisch dargestellt,
- Fig 2: ein Längsschnitt der Vorrichtung von Fig. 1, gemäss den Schnittlinien I (Fig. 1),
- Fig. 3: ein Längsschnitt der Vorrichtung von Fig. 1, gemäss den Schnittlinien III (Fig. 2),
- Fig. 3a: eine Variante der Vorrichtung von Fig. 3,
- Fig. 4: die Vorrichtung von Fig. 1, leicht vergrössert dargestellt, mit gewissen Variationen,
- Fig. 5: Teile der Vorrichtung der Fig. 4, in abgeklappter Weise dargestellt,
- Fig. 6: eine Variante eines Elementes der Vorrichtung von Fig. 3,
- Fig. 6a: eine Variante der Vorrichtung von Fig. 6,
- Fig. 7: eine Variante der Vorrichtung, gemäss den Schnittlinien IV (Fig. 8) dargestellt,
- Fig. 8: einen Querschnitt der Vorrichtung der Fig. 7, gemäss den Schnittlinien V (Fig. 7) dargestellt,
- Fig. 9: eine Variante der Vorrichtung,
- Fig. 10: eine Variante des Teiles von Fig. 9.
- Fig. 11: eine Variante eines Details der Vorrichtung in Blickrichtung VI (Fig. 12),
- Fig. 12: das Detail von Fig. 11 in Blickrichtung VII (Fig. 11), und
- Fig. 13: das Detail von Fig. 11, in Blickrichtung VIII (Fig. 11).
- Fig. 14 und 15: je eine Variante eines Details einer Ausführungsform der erfindungsgemässen Vorrichtung, anhand eines entsprechend geänderten Querschnittes der Fig. 8 dargestellt.
- Fig. 16: einen Ausschnitt aus Fig. 14, vergrössert dargestellt, in einem anderen Betriebszustand.

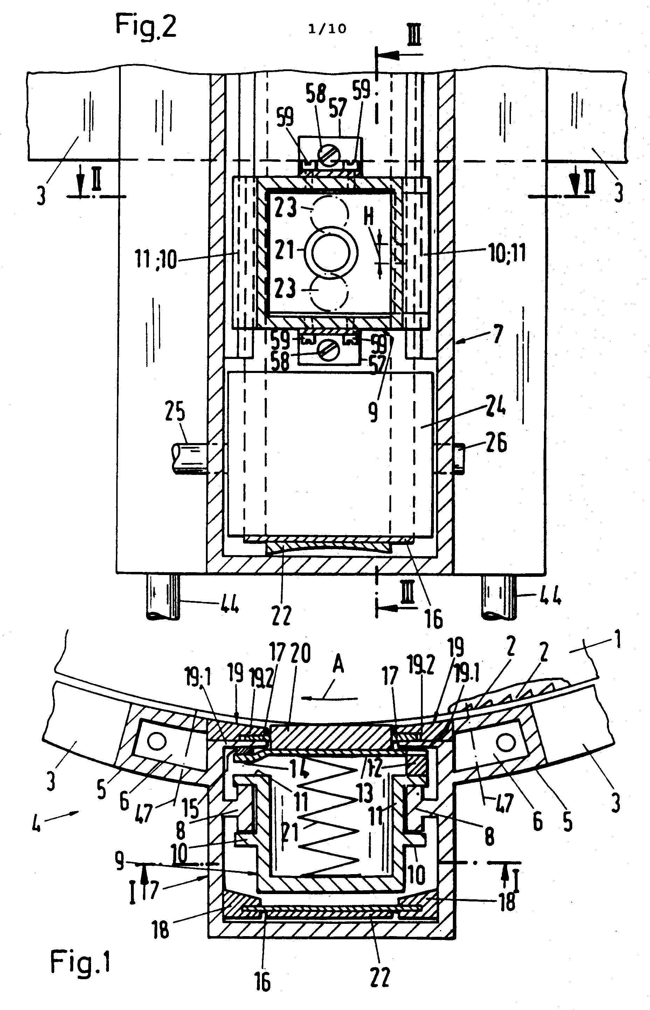

Die Fig. 1 zeigt eine mit Garnituren 2 versehene Walze 1, welche bspw. ein Kardentambour sein kann.

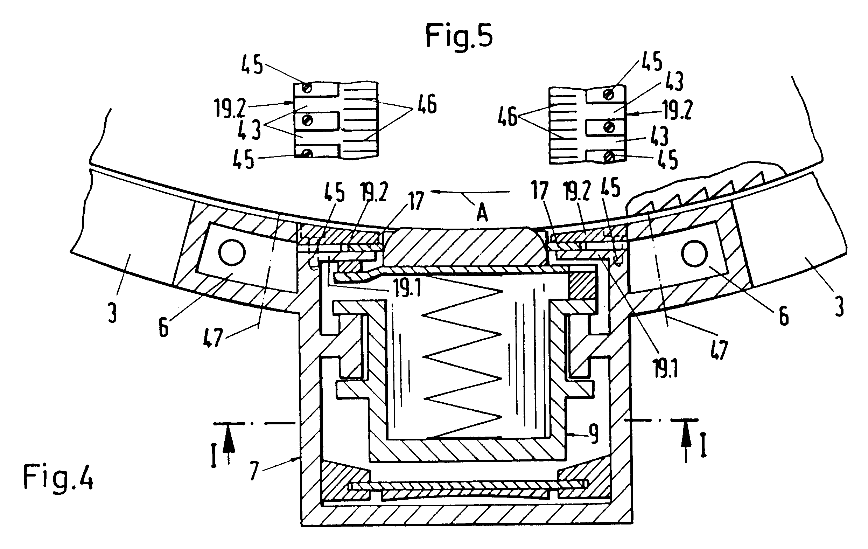

Um diesen Kardentambour 1 sind Garniturstäbe oder Abdekkungen 3 sowie dazwischen eine Schleifvorrichtung 4 an Kardenflanschen 30 (Fig. 3) befestigt, was in den Figuren 1, 4 und 8 symbolisch mit einer strichpunktierten Linie 47 angedeutet ist.

Die Schleifvorrichtung 4 setzt sich im wesentlichen aus zwei Flügelteilen 5 und einem sich dazwischen befindlichen, jedoch die Flügelteile 5 integrierenden Gehäuse 7, zusammen.

Die Flügelteile 5 weisen je einen Hohlraum 6 auf.

Im Gehäuse 7 ist ein Schlitten 9 für die Bewegungen über die Garnituren hinweg mittels Führungsbalken 8 geführt, dabei ist der Führungsbalken 8 Teil des Gehäuses 7. Zu diesem Zweck weist der Schlitten 9 auf beiden Seiten, mit Blick auf Fig. 1 gesehen, je einen oberen Führungsflansch 11 und einen unteren Führungsflansch 10 auf.

Im weiteren ist mittels eines Zwischenstückes 12 eine Blattfeder 13 am rechten oberen Führungsflansch 10 (mit Blick auf Fig. 1 gesehen) des Mitnehmers 9 befestigt.

Diese Blattfeder 13 dient zur Aufnahme eines Schleifsteines 20, mittels welchem die Garniturspitzen geschliffen werden.

Um den für dieses Schleifen notwendigen Druck des Schleifsteines auf die Garniturspitzen zu erzeugen, ist zwischen der Blattfeder 13 und dem Schlitten 9 eine Druckfeder 21 eingespannt.

Um für das vorgenannte Schleifen den Schlitten 9 samt dem Schleifstein 20 über die Garnituren zu bewegen, ist der Schlitten 9 mittels Mitnehmer 57 mit einem inneren Trum 17 eines Antriebsbandes verbunden, welches für dessen Antrieb um eine Antriebs- und Umlenkwalze 24 herumgeführt ist und im unteren Bereich ein äusseres Trum 16 aufweist.

Die Mitnehmer 57 sind mittels Schrauben 58 mit dem Gehäuse 7 und mittels Schrauben 59 mit dem inneren Trum 17 fest verbunden. Damit der Schleifstein 20 weitgehend frei bewegbar ist, weist die Blattfeder 13 wie auch eine später erwähnte Blattfeder 13.1 je einen Federsteg 131 mit der Breite H auf, welcher den mit dem Zwischenstück 12 und den mit dem Schleifstein verbundenen Teil verbindet. Dabei kann die Breite H empirisch festgelegt werden.

Das äussere Trum 16 des Antriebsbandes wird mittels einer äusseren Bandführung 18 und das innere Trum 17 mittels einer inneren Bandführung 19 geführt. Zu diesem Zweck weisen die Bandführungen 18 und 19 je Schlitze auf, in welchen das Antriebsband geführt werden kann.

Aus Fig. 2 ist ersichtlich, dass anstelle einer einzigen Feder 21 alternativ zwei Federn 23 vorgesehen werden können, was, wie später beschrieben, gewisse Vorteile haben kann.

Aus den Figuren 1 und 2 ist im weiteren ersichtlich, dass das Antriebsband einen Füllbelag 22 aufweist, welcher auf der ganzen Länge des Antriebsbandes, ausgenommen an derjenigen Stelle, an welcher sich der Schleifstein 20 befindet, aufgetragen ist. Das heisst, der Füllbelag grenzt beidseits des Schleifsteines 20 an diesen heran und hat den Zweck, den Raum vor und nach dem Schleifstein, in Längsrichtung des Antriebsbandes gesehen, zwischen den inneren Bandführungen 19, im wesentlichen derart auszufüllen, dass sich dort keine Faseransammlungen entwickeln können.

Aus Fig. 2 ist im weiteren noch ersichtlich, dass an den Flügelteilen 5 Druckluftanschlüsse 44 angeschlossen sind, welche in den Hohlraum 6 münden und deren Zweck später beschrieben wird.

Aus Fig. 2 ist ebenfalls ersichtlich, dass die Antriebs- und Umlenkwalze 24 eine Antriebswelle 25 und eine Achse 26 aufweist, weiche je im Gehäuse 7 drehbar gelagert sind.

Die Fig. 3 zeigt den sich in der Endlage seines Weges befindlichen Schlitten 9 samt Stein 20. Diese Endlage wird einer nicht dargestellten Steuerung mittels eines Endschalters 28, dessen Nocken 29 vom Stein 20 bewegt wird, gemeldet. Anstelle des Endschalters 28 kann auch ein Näherungsinitator verwendet werden.

In dieser Figur ist im weiteren eine bereits in Fig. 1 gezeigt Kulissenführung 15 gezeigt, welche ein Blattfederende 14 der Blattfeder 13 in diesen Endbereich des Mitnehmerweges führt.

Im weiteren ist in Fig. 3 ein Diamantrechen 31 und eine Diamantwalze 35 gezeigt, wobei allerdings in der Praxis lediglich entweder der Diamantrechen 31 oder die Diamantwalze 35 Verwendung finden würde.

Der Diamantrechen ist in einem Träger 32 gefasst, der im Tambour geführt und mittels zweier Druckfedern 33 gegen den Schleifstein 20 gedrückt wird, allerdings nicht weiter als dies ein Wegbegrenzer 34 erlaubt.

Die Kulissenführung 15 ist wie in Fig. 3 gezeigt soweit in Richtung Kardengarnitur 2 gezogen, dass der Endteil 14 der Blattfeder 13 von dieser Kulissenführung 15 geführt ist, wenn der Stein 20 über den Diamantrechen 31 geführt wird. Durch die Kraft der Feder 21 oder der Federn 23 und der Führung mittels der Kulissenführung 15 ist der Stein 20 beim Ueberqueren des Diamantbrechers 31 in seiner Lage fixiert, so dass allein der Diamantrechen bewegbar ist und, wie bereits beschrieben, durch die Federn 33 gegen den Stein 20 gedrückt werden kann.

Durch die am Stein 20 vorgesehenen Rundungen 56 besteht keine Gefahr, dass beim Auffahren des Steins 20 auf den Diamantrechen der Diamantrechen oder der Stein beschädigt werden könnte.

Anstelle des Diamantrechens 31 kann die Diamantwalze 35 verwendet werden, welche drehbar in einem Träger 36 gelagert ist, der seinerseits in einem Führungselement 37 geführt ist, welches an einem Kardenflansch 30 befestigt ist.

Für das Andrücken der Schleifwalze 35 gegen den Stein 20 ist eine Druckfeder 38 vorgesehen, deren Hub, analog zur Wegbegrenzung des Diamantrechens 31, durch einen Wegbegrenzer 39 begrenzt ist.

Angetrieben wird die Diamantwalze 35 durch einen Antrieb 40.

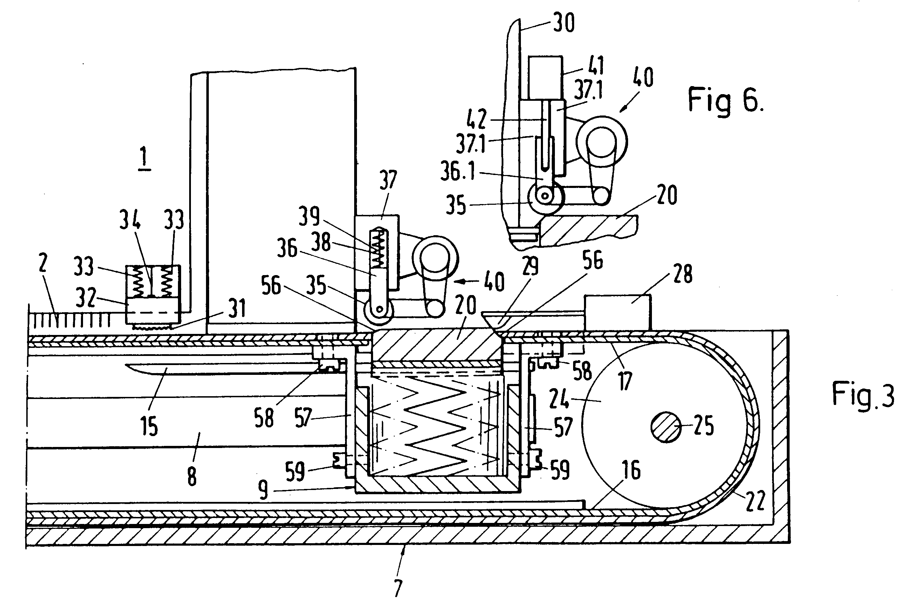

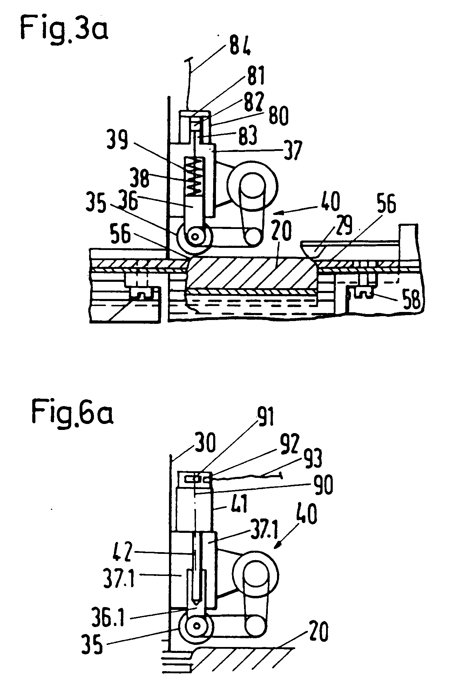

Die Fig. 6 zeigt insofern eine Variante zur Diamantwalzenanordnung der Fig. 3 als der Träger 36.1 nicht durch eine Feder, sondern durch eine Spindel 42 gegen den Stein 20 bewegt wird, welche durch einen Spindelmotor 41 angetrieben wird. Der Spindelmotor 41 ist am Führungselement 37.1 befestigt, welches seinerseits, wie das Führungselement 37, am Kardenflansch 30 befestigt ist. Auch hier wird die Diamantwalze durch einen Antrieb 40 angetrieben.

Der Vorteil des Abschlusses des Gehäuses 7 durch das Antriebsband und den Stein 20 besteht darin, dass das Innere des Gehäuses 7 nicht mit Fasern gefüllt werden kann.

Die Fig. 4 befasst sich noch im weiteren mit dem Vermeiden von Faseransammlungen in Führungsflächen des inneren Trumes 17 des Transportbandes, in dem Luftkanäle 43, welche die das innere Trum 17 führenden Schlitze mit dem Hohlraum 6 verbinden, so dass die mittels den Druckluftanschlüssen 44 eingeblasene Druckluft durch die Luftkanäle 43 in diese Führungsschlitze eingeblasen werden kann. Dadurch entsteht eine Strömung, welche verhindert, dass Fasern in diese Schlitze gelangen können.

Um die Luft unter- und oberhalb des im Schlitz der inneren Bandführung 19 geführten Trumes 17 besser zu verteilen, sind in den Führungsflächen des Schlitzes Rillen 46 (Fig. 5) vorgesehen, so dass sich die Luft zwischen den Führungsflächen und den Antriebsriemenflächen vorschieben kann, wodurch verhindert wird, dass nur eine der Führungsflächen mit Luft beaufschlagt wird.

Zu diesem Zweck sind die in Fig. 1 gezeigten inneren Bandführungen 19 in Fig. 5 in einen unteren Bandführungsteil 19.2 und in einen oberen Bandführungsteil 19.1 unterteilt, so dass die Rillen 46 in beiden Bandführungsflächen der Schlitze eingebracht werden können, wobei das untere Teil 19.2 mittels der Schrauben 45 an das obere Teil 19.1 angeschraubt wird.

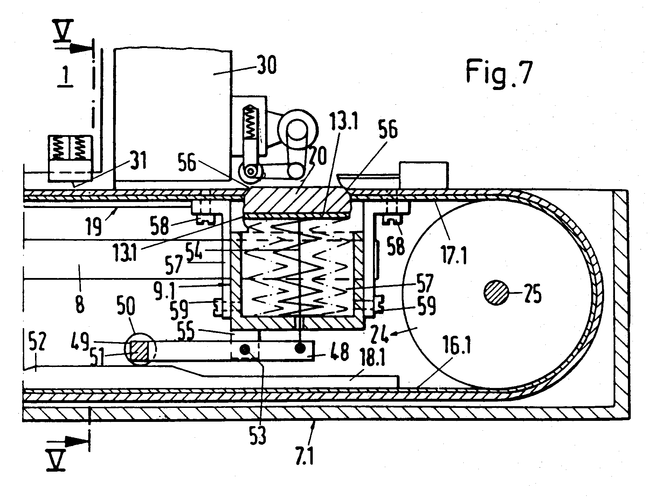

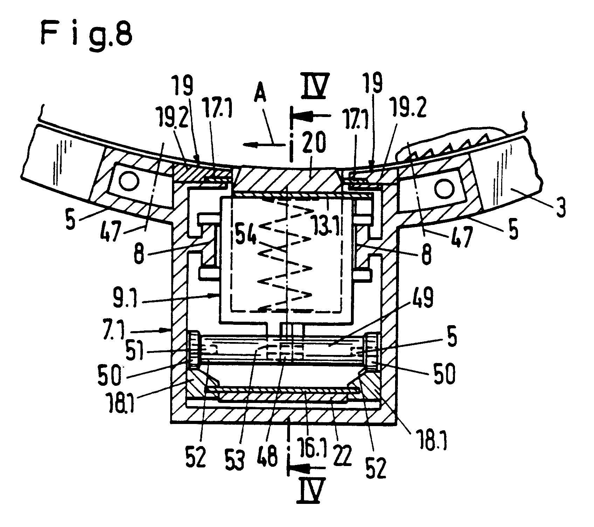

Im Zusammenhang mit den Figuren 1 und 3 wurde Sinn und Zweck der Kulisse 15 beschrieben. Mit den Figuren 7 und 8 wird eine alternative Kulissenführung gezeigt, um die Blattfeder 13.1 anzuheben.

Diese Alternative besteht darin, dass auf dem Schlitten 9.1 ein Zughebel 48 schwenkbar in einer Schwenkachse 53 gelagert ist, welche ihrerseits Teil eines Schwenklagers 55 bildet, das am Schlitten 9.1 befestigt ist. Am einen Ende ist der Zughebel 48 mit einem Zugseil 54 verbunden, welches ebenfalls mit der Blattfeder 13.1 verbunden ist. Das andere Ende des Zughebels 48 weist einen Querbalken 49 auf, an dessen Ende Rollen 50 mittels Drehachsen 51 drehbar angeordnet sind.

Wird nun der Schlitten 9.1 mittels des Antriebsbandes in die in Figur 7 gezeigte Endposition verschoben, so werden die Rollen 50 je von den beidseitig vorgesehenen Kulissenführungen 52 derart geführt, dass die Rollen 50 eine Bewegung nach oben, mit Blick auf Figur 7 gesehen, durchführen, wodurch das Zugseil 54 die Blattfeder 13.1 in eine vorgegebene Position zurückzieht, in welcher der Stein 20 entweder durch den Diamantrechen 31 oder die Diamantwalze 35 geschliffen wird. Gleichzeitig wird dadurch ein sanftes Auflegen des Schleifsteines auf die Garnitur erreicht.

In den Varianten der Figuren 7 und 8 ist der in Figur 1 und 2 gezeigte Belag 22 nicht eingezeichnet, was jedoch nicht heisst, dass dieser nicht auch in diesen Ausführungen vorgesehen werden kann, sondern er ist der Einfachkeit halber weggelassen worden.

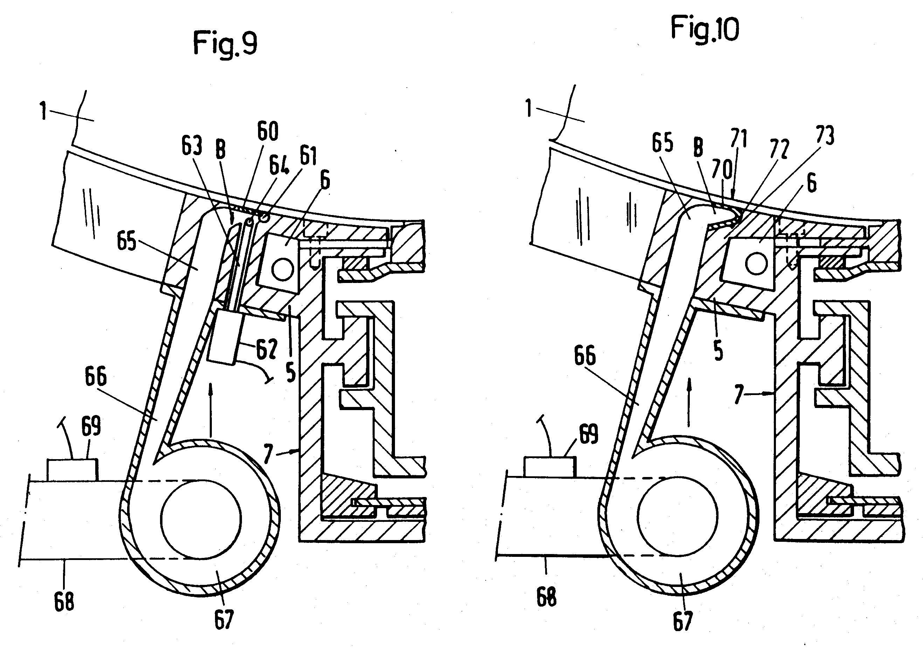

Die Figuren 9 und 10 zeigen die Möglichkeit, die wenn auch nur kleinen Mengen an Schleifstaub abzusaugen, um zu verhindern, dass dieser Schleifstaub im wesentlichen sich nicht im Fasermaterial niedersetzt.

Zu diesem Zweck weist Fig. 9 eine Absaugdüse 65 und eine diese abschliessende Verschlussklappe 60 auf, welche mittels eines Scharnieres 61 im Flügelteil 5 schwenkbar gelagert ist. Der Flügelteil 5 ist wie aus Fig. 9 ersichtlich, gegenüber den Flügelteilen der vorerwähnten Figuren entsprechend abgeändert.

Zur Bewegung der Verschlussklappe 60 ist diese mittels einer Gelenkverbindung 64 mit einer Kolbenstange 63 eines Hubelementes 62 verbunden. Das Hubelement 62 ist stationär angeordnet. Das Hubelement kann z.B. ein Magnet mit Federkraft sein, wobei die Federkraft die Klappe 60 schliesst und die Magnetkraft die Klappe 60 öffnet.

Die Absaugdüse 65 weist eine Länge auf, welche mindestens der ganzen Breite des Tambours 1 entspricht.

Der Absaugdüse 65 angeschlossen ist ein Absaugkanal 66, welcher tangential in eine Luftsammelleitung 67 mündet.

An einem Ende der Luftsammelleitung 67 ist eine Absaugleitung 68 angeschlossen, welche fakultativ mit einem Feuerwächter 69 versehen werden kann.

Die Fig. 10 weist dieselben Elemente auf, ausgenommen, dass die Verschlussklappe 60 der Fig. 9 durch eine Verschlusslippe 70 ersetzt ist, welche Teil eines Verschlusselementes 71 ist, welches im weiteren einen Befestigungsschenkel 72 aufweist, der mittels einer Befestigung 73 (lediglich mit strichpunktierten Linien angedeutet) am Flügelteil 5 befestigt ist.

Das Absaugen durch die Absaugdüse 65 geschieht lediglich beim Schleifen, d.h. in der Zwischenzeit wird das Absaugen unterbrochen und, wie in Fig. 9 und 10 gezeigt bleibt die Verschlussklappe resp. die Verschlusslippe 70 geschlossen. Während des Schleifens wird die Verschlussklappe 60 in der Oeffnungsrichtung B geöffnet, was mittels des gesteuerten Hubelementes 62 geschieht. Das heisst, dass das Absaugen durch den Kanal 65 mit dem Oeffnen der Verschlussklappe 60 synchronisiert wird.

In Fig. 10 geschieht die Synchronisation des Oeffnens der Verschlusslippe 70 automatisch durch den in der Absaugdüse 65 herrschenden Unterdruck, d.h. dass das Verschlusselement 71 eine derart elastische Kraft aufweist, dass die Verschlusslippe 70 ohne Unterdruck in der Absaugdüse 65 geschlossen bleibt.

Es sei erwähnt, dass das Schleifen entweder im Betrieb, d.h. während des Kardierens oder nach Auslauf der Karde durchgeführt werden kann.

Die Wartezeiten zwischen den Schleifperioden müssen empirisch festgelegt werden.

Ebenfalls ist es nicht zwingend, dass der genannte Diamantrechen 31 oder die Diamantwalze 35 vorgesehen werden, es besteht auch die Möglichkeit den Schleifstein auszuwechseln, zu diesem Zwecke ist der Schleifstein mittels Schrauben (nicht dargestellt) mit der Blattfeder 13, 13.1 verbunden.

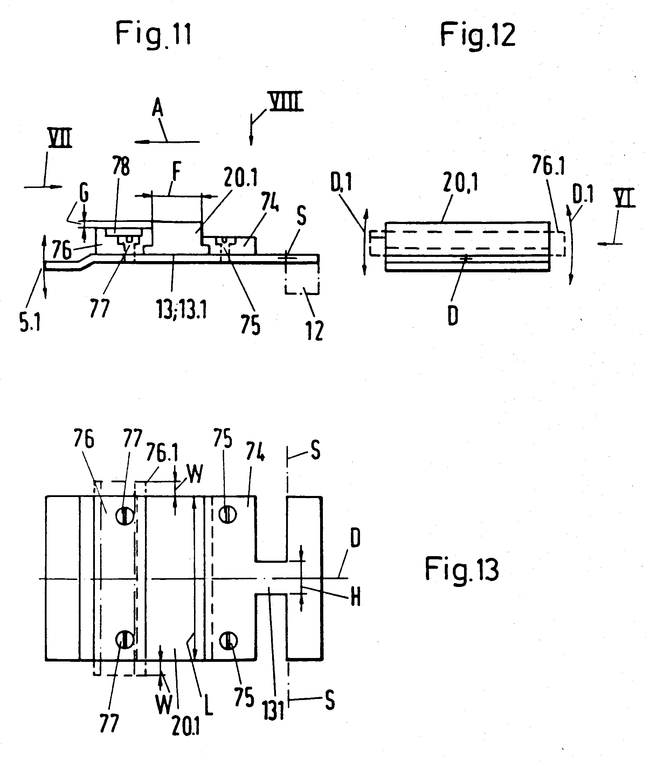

Die Figuren 11 bis 13 zeigen einen Schleifstein 20.1, welcher eine Variante des Schleifsteines 20 ist, welcher mit den vorangehenden Figuren gezeigt wurde. Dieser Stein 20.1 weist eine gegenüber dem mit den vorangehenden Figuren gezeigten Stein eine reduzierte Breite F auf, welche zwischen 10 mm und 15 mm beträgt. Die Breite der Steine 20 der vorangehenden Figuren beträgt ca. 30 mm.

Der Vorteil der reduzierten Steinbreite F liegt darin, dass sich der Stein weniger mit Schleifstaub vollsetzt, d.h. in einem gewissen Sinne eine selbstreinigende Wirkung aufweist. Es versteht sich jedoch, dass die Breite von 10 mm bis 15 mm nicht als Einschränkung gelten soll sondern, dass es je nach Steinart insbesondere Porosität auch eine andere optimale Steinbreite ermittelbar ist, was empirisch festgestellt werden müsste. Das wesentliche besteht in der Idee eine Breite zu finden, welche eine selbstreinigende Wirkung aufweist.

Der Schleifstein 20.1 wird einerseits durch eine Befestigungslasche 74 und andererseits durch eine Magnetplatte 76 festgehalten. Zu diesem Zweck ist die Befestigungslasche 74 mit Schrauben 75 und die Magnetplatte 76 mit Schrauben 77 an der Blattfeder 13 resp. 13.1 befestigt. Die Magnetplatte ist wie aus Fig. 11 ersichtlich, anschliessend an den Schleifstein 20.1, mit Blick in Bewegungsrichtung A des Tambours 1 gesehen, vorgesehen, sodass der durch das Schleifen entstehende metallische Schleifstaub sich an der Magnetplatte 76 festhält.

Als Variante kann für die Aufnahme des genannten Schleifstaubes eine Magnetplatte 76.1 eine Mulde 78 aufweisen, welche den Vorteil aufweist, dass dadurch weniger Gefahr besteht, dass beim Schleifen der Tambourgarnitur mit Hinausragen kann jedoch auch für die Magnetplatte 76 vorgesehen werden. Auf diese Weise entsteht eine Fangfläche für den Schleifstaub, welche über die Länge L des Schleifsteines 20.1 ragt.

In den Figuren 11 bis 13 ist die Schwenkbarkeit der Blattfeder 13 resp. 13.1 um die Schwenkachse S und die Drehbarkeit dieser Blattfeder um die Drehachse D dargestellt, wobei die Schwenkbewegung mit S.1 und die Drehbewegung mit D.1 gekennzeichnet ist.

Ausserdem ist hier der Federsteg 131 mit der Breite H nochmals gezeigt.

Wie aus Fig. 11 ersichtlich, ist ein Höhenunterschied G zwischen dem Schleifstein 20.1 und der Magnetplatte 76 gezeigt. Innerhalb dieses Höhenunterschiedes G kann sich der Schleifstein 20.1 abnützen.

Im übrigen sind bereits beschriebene Elemente der anderen Figuren mit den gleichen Bezugszeichen versehen.

Letztlich besteht noch die Möglichkeit, das Abnützen des Schleifsteines 20 oder 20.1 zu überwachen, indem beispielsweise, wie in Fig. 3a gezeigt, ein Führungszylinder 80 mit dem Führungselement 37 verbunden ist und ein im Führungszylinder 80 geführter Näherungskolben 82 mittels eines mit dem Träger 36 verbundenem Stössel 83 genau denselben Hubweg aufweist wie der Träger 36. Die Bewegungen des Näherungskolben 82 werden dabei von einem berührungslosen Näherungsschalter 81 registriert, d.h. der Abstand zwischen dem Näherungskolben 82 und dem Näherungsschalter 81 wird durch den letzteren registriert und gibt mittels einer Verbindungsleitung 84 dem genannten Abstand entsprechende Signale an eine Steuerung (nicht gezeigt) ab, welche bei Erreichen einer vorgegebenen Abnützung des Steines 20 Warnsignale an die Bedienungsperson abgibt und/oder das Bewegen des Schleifsteines 20 resp. 20.1 in der Ausgangsstellung stoppt.

Die Fig. 6a zeigt dieselbe Funktion, jedoch mit anderen Mitteln, indem die Welle 90 des Motores 41 an dem der Spindel 82 gegenüberliegenden Ende mit einem Impulsrad 91 versehen ist, dem gegenüber ein Impulszähler 92 liegt, der die vom Impulsrad 91 abgegebenen Impulse zählt und als Signale über eine Verbindungsleitung 93 an eine Steuerung (nicht gezeigt) abgibt, welche bei Erreichen einer vorgegebenen Abnützung des Steines 20 Warnsignale an die Bedienungsperson aussendet und/oder das Bewegen des Steines 20 in der Ausgangsstellung unterbricht.

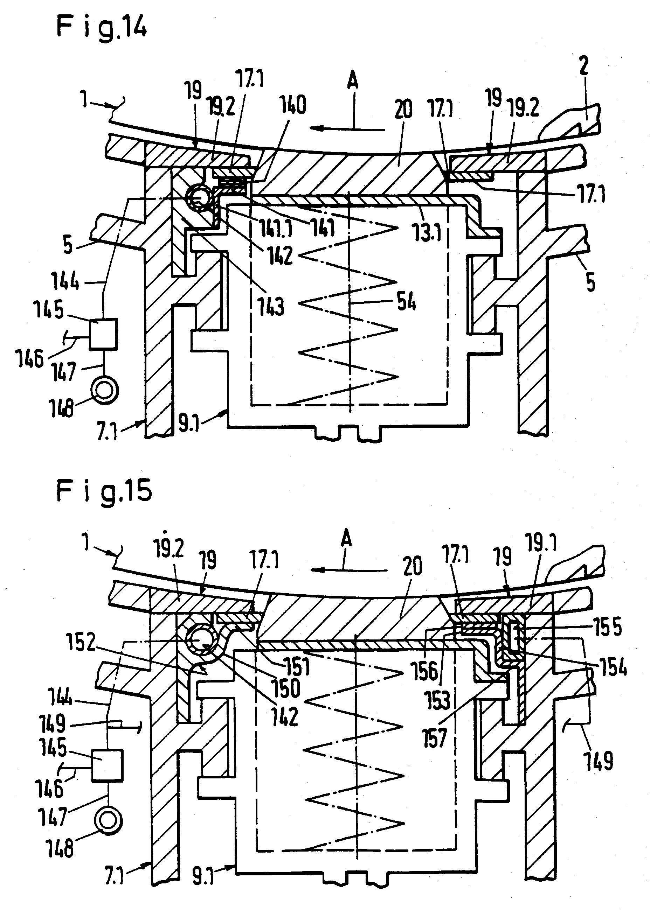

Die Fig. 14, welche im wesentlichen einen Ausschnitt aus der Fig. 8 darstellt, weist jedoch gegenüber der Fig. 8 den Unterschied auf, dass nicht mehr die zum Gehäuse 7.1 gehörenden, den Fuhrungsteilen 19.2 gegenüberliegenden Führungsteile (nicht gekennzeichnet) zur Führung des Antriebsbandes 17.1 vorgesehen sind, sondern ein Lineardichtungselement 140, welches am linken (mit Blick auf Fig. 14 gesehen) Antriebsband 17.1 anliegt und mittels eines Anpresschenkels 141 in einem Ruhezustand gegen das Antriebsband 17.1 presst.

Der Anpresschenkel 141 ist mit einem Kraftschenkel 141.1 fest verbunden, welcher an einem Trägerelement 143 derart befestigt ist, dass dieser, wie später beschrieben, eine Biegebewegung durchführen kann.

Im Trägerelement 143 ist ein Druckschlauch 142 eingelassen, welcher am Kraftschenkel 141.1 anliegt und im Ruhezustand drucklos ist.

Dieser Druckschlauch ist ein im Querschnitt dehnbarer Schlauch.

Der Druckschlauch 142 ist mit einer Druckleitung 144 verbunden, welche in ein Steuerventil 145 mündet, das mittels Steuersignalen (nicht gekennzeichnet) einer Steuerleitung 146 gesteuert wird.

Auf der der Druckleitung 144 gegenüberliegenden Seite des Steuerventiles 145 ist eine Druckzufuhrleitung 147 vorgesehen, welche einerseits mit dem Steuerventil 145 und anderseits mit einer Druckquelle 148 verbunden ist.

Das Trägerelement 143 ist seinerseits fest im Gehäuse 7.1 eingelassen.

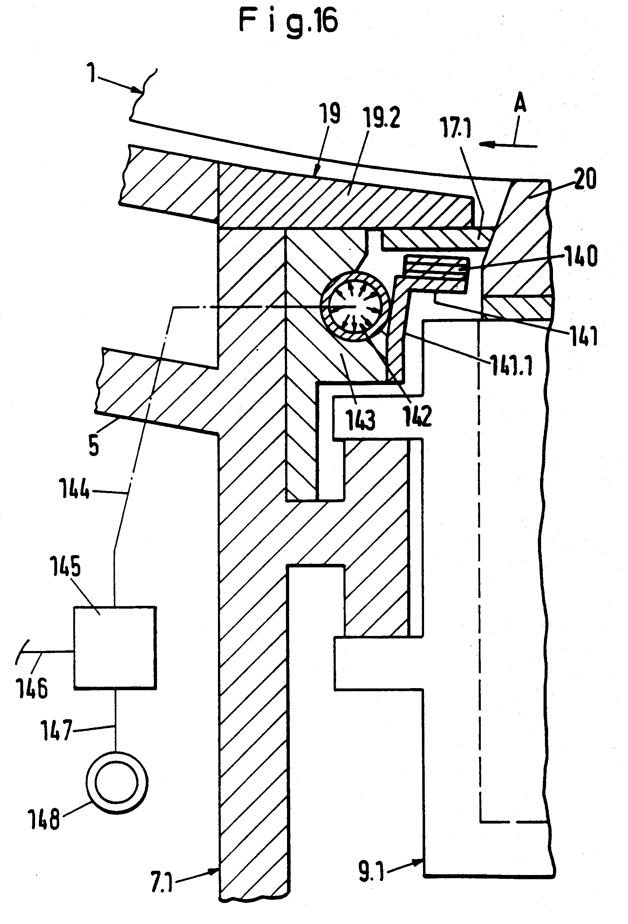

Soll nun das Lineardichtungselement 140 zusammen mit dem Anpresschenkel 141 aus der in Fig. 14 gezeigten Ruheposition in eine in Fig. 16 gezeigte Betriebsposition verändert werden, so wird das Steuerventil 145 derart gesteuert, dass im Druckschlauch 142 ein Druck aufgebaut wird, so dass der Querschnitt sich, wie in Fig. 16 gezeigt, derart erweitert, so dass der Kraftschenkel 141.1 wie gezeigt, mit Blick auf Fig. 16 gesehen, nach rechts abgebogen wird, so dass das Lineardichtungselement 140 nicht mehr am Antriebsband 17.1 anliegt und dadurch der Schleifstein 20 zum Durchführen der Schleifoperation bewegt werden kann.

In Fig. 14 ist gezeigt, dass der Einfachheit halber nur auf derjenigen Seite des Schleifsteines 20 eine Lineardichtung 140 vorgesehen wird, welche in Drehrichtung A des Tambours 1 gesehen, nach dem Schleifstein 20 liegt, da sich Fasern in erster Linie auf dieser Seite des Schleifsteines ansammeln können, was falls das Antriebsband 17.1 im Ruhezustand des Schleifsteines 20 nicht dicht am Teil 19.2 der Innenbandführung 19 anliegt, zur Folge hat, dass Fasern auch zwischen diesen Teil 19.2 und das Band 17.1 gelangen können, was deshalb zu einer Störung des Schleifvorganges führt, da der Schleifstein nicht mehr eindeutig über den gesamten Schleifweg den richtigen Abstand zur Tambourgarnitur 2 aufweist und dadurch die Zahnspitzen der Garnitur ungleichmässig abgeschliffen werden.

Die Fig. 15 zeigt einerseits, dass jedoch auch auf beiden Seiten des Schleifsteines 20, mit Blick auf Fig. 15 gesehen, Dichtungen vorgesehen werden können.

Diese Figur 15 zeigt auch Varianten der Dichtungsart gemäss Fig. 14. Beispielsweise zeigt die Seite links (mit Blick auf Fig. 15 gesehen) des Schleifsteines 20 ein ebenfalls im Gehäuse 7.1 fest eingelassenes Trägerelement 152 mit einem Kraftschenkel 150 und einem daran anschliessenden gleichzeitig als Lineardichtungselement funktionierender und im Ruhestand gegen den Förderbandteil 17.1 pressender Anpresschenkel 15.1.

In diesem Trägerelement 152 ist ebenfalls ein Druckschlauch 142 über die ganze Länge des Trägerelementes 152 eingelassen, welcher wie mit Fig. 14 gezeigt und beschrieben, mit Druck beaufschlagt werden kann.

Dabei wird im Betriebszustand, wenn der Druckschlauch 142 mit Druck beaufschlagt wird, der Anpresschenkel 151 auf Grund einer Biegebewegung des Kraftschenkels 150, infolge der Ausdehnung des Druckschlauches 142 vom Antriebsband 17.1 mindestens so weit abgehoben, dass mindestens kein Druck mehr auf das Antriebsband 17.1 ausgeübt wird, um die vorgenannte Schleifbewegung des Schleifsteines 20 zu ermöglichen.

Auf der rechten Seite (mit Blick auf Fig. 15 gesehen) des Schleifsteines 20 ist eine weitere Variante mit einem Trägerelement 157 vorgesehen, welches einen Kraftschenkel 154, einen daran anschliessenden Anpresschenkel 153 und ein Lineardichtungselement 156 aufweist, welches vom Anpresschenkel 153 gegen den Antriebsriementeil 17.1 gepresst wird.

Ein zwischen dem Trägerelement 157 und dem Gehäuse 7.1 eingelassener Druckschlauch 155 übt dieselbe Funktion aus wie für den Druckschlauch 142 beschrieben.

Das Trägerelement 157 ist ebenfalls fest mit dem Gehäuse 7.1 verbunden.

Ein Unterschied des Trägerelementes 152 gegenüber dem Trägerelement 157 kann bezüglich verwendetem Material beispielsweise derjenige sein, dass das Trägerelement 152 ein Kunststoff-Gussteil sein kann, während beispielsweise das Trägerelement 157 ein gebogenes Metallteil sein kann.

Da grundsätzlich die nicht neu beschriebenen Elemente der Fig. 14 und 15 sowie 16 den Elementen der Fig. 8 entsprechen, sind die der Fig. 8 entsprechenden Elemente mit denselben Bezugszeichen versehen.

## Patentansprüche

1. Vorrichtung zum Schleifen von Garnituren, welche an einer Walze (1), bspw. an einem Tambour, einem Briseur oder einer Abnehmerwalze oder an einem Wanderdeckel einer Karde aufgezogen sind, mit einem, im wesentlichen rechtwinklig zur Bewegungsrichtung der Garnituren, über die ganze Breite der Trommel-Garnituren bewegbaren Schleifelement (20, 20.1), welches in einem in Führungen geführten Mitnehmer, vorzugsweise einem Schlitten (9, 9.1), aufgenommen ist, wobei der Mitnehmer (9, 9.1) für das genannte Bewegen des Schleifelementes durch Antriebsmittel (16, 16.1; 17, 17.1) über die Garnituren bewegt wird, dadurch gekennzeichnet, dass das Antriebsmittel ein flexibles, entsprechend in Führungen (18, 18.1; 19) geführtes Antriebsband (16, 16.1; 17, 17.1) ist, welches für das genannte Bewegen des Schleifelementes (20, 20.1) über die Garnituren (2) mit diesem verbunden ist und, dass die innere Führung (19) einen dem Tambour gegenüberliegenden starren Führungsteil (19.2) und einen im Ruhezustand am Antriebsband (17.1) anliegenden, jedoch auf der gegenüberliegenden Seite des Antriebsbandes befindlichen, eine lineare Dichtung bildenden Führungsteil (140, 141, 151, 153, 156) umfasst, und
dass der Führungsteil mittels eines Druckmittels (142,155) aus dem Ruhezustand in einen Betriebszustand bewegbar ist, in welchem dieser Führungsteil nicht mehr am Antriebsband (17.1) anliegt.

2. Vorrichtung nach Anspruch 1,
dadurch gekennzeichnet, dass der bewegbare Führungsteil einen vorgespannten Kraftschenkel (14.1, 150, 154) und einen daran vorgesehenen Anpresschenkel (141, 151, 153) umfasst, welcher mittels des Kraftschenkels eine gegen das Antriebsband 17.1 gerichtete den Ruhezustand bildende Dichtungskraft ausübt.

3. Vorrichtung nach Anspruch 2,
dadurch gekennzeichnet, dass zwischen dem Anpresschenkel (141, 153) und dem Antriebsband (17.1) ein Lineardichtungselement (140, 156) vorgesehen ist, welches sich über die ganze Breite des Tambours (1) erstreckt.

4. Vorrichtung nach Anspruch 2,
dadurch gekennzeichnet, dass der Anpresschenkel (151) ein Lineardichtungselement bildet, welches sich über die ganze Breite des Tambours (1) erstreckt.

5. Vorrichtung nach Anspruch 2,
dadurch gekennzeichnet, dass das Druckmittel ein im Querschnitt dehnbarer Druckschlauch (142, 155) ist, welcher im Druckzustand am Kraftschenkel (141.1, 150, 154) infolge Querschnittserweiterung eine Bewegung in den Betriebszustand verursacht.

6. Vorrichtung nach Anspruch 1,
dadurch gekennzeichnet, dass das Antriebsband (16, 16.1; 17, 17.1) derart mit dem Schlitten (9, 9.1) verbunden ist und die Führungen (18, 18.1; 19) derart angeordnet sind, dass das Antriebsband und das Schleifelement (20, 20.1) gemeinsam den Raum unmittelbar unterhalb der Garnituren, d.h. im Raum unmittelbar vor dem Schleifelement, von den Garnituren her gesehen, gegenüber dem Raum hinter dem Schleifelement im wesentlichen abdichtet.

7. Vorrichtung nach Anspruch 6,
dadurch gekennzeichnet, dass das Antriebsband vor und nach dem Schleifelement in Bewegungsrichtung des Antriebsbandes gesehen, mit einem Belag versehen ist, welcher den Raum zwischen den Garnituren und im Antriebsband im wesentlichen ausfüllt.

8. Vorrichtung nach Anspruch 1,
dadurch gekennzeichnet, dass die Führungen des Antriebsbandes mit Lufteintrittsöffnungen (43) verbunden sind, durch welche Druckluft aus einer Druckluftquelle eingeblasen wird.

9. Vorrichtung nach Anspruch 8,
dadurch gekennzeichnet, dass die Führungsflächen der Antriebsbandführung mit Rillen (46) versehen sind, welche im wesentlichen in einem rechten Winkel zur Bewegungsrichtung des Antriebsbandes angeordnet sind und sich im wesentlichen über die ganze, in derselben Richtung gerichteten Breite der Auflage des Antriebsbandes auf den Führungsflächen erstrecken.

10. Vorrichtung nach Anspruch 1,
dadurch gekennzeichnet, dass das Schleifelement durch mindestens ein Andruckmittel, vorzugsweise einer Feder (21, 23), gegen die Garnituren gedrückt wird.

11. Vorrichtung nach Anspruch 1,
dadurch gekennzeichnet, dass das Schleifelement mittels einer Blattfeder (13, 13.1) mit dem Schlitten verbunden ist, wobei die Blattfeder über das weitgehend frei bewegliche Schleifelement einen sich zwischen dem Schlitten und dem Schleifelement befindlichen Steg aufweist, dessen Breite (H) ein Bruchteil der Länge des Schleifelementes, in Bewegungsrichtung des Schleifelementes gesehen, aufweist.

12. Vorrichtung nach Anspruch 1,
dadurch gekennzeichnet, dass zum Nachschärfen des Schleifelementes ein Nachschärfelement an der Trommel vorgesehen ist.

13. Vorrichtung nach Anspruch 12,
dadurch gekennzeichnet, dass als Nachschärfelement ein sogenannter Diamantrechen (31) am Rande der Trommel ausserhalb der Garnituren vorgesehen ist.

14. Vorrichtung nach Anspruch 1,
dadurch gekennzeichnet, dass zum Nachschärfen des Schleifelementes ein Nachschärfelement ortsfest drehend vorgesehen ist.

15. Vorrichtung nach Anspruch 14,
dadurch gekennzeichnet, dass als Nachschärfelement eine mit Diamantstaub beschichtete rotierende Walze (35) ausserhalb der Trommel vorgesehen ist.

16. Vorrichtung nach Anspruch 13,
dadurch gekennzeichnet, dass zusätzliche Führungen (15, 52) derart vorgesehen sind, dass diese das Schleifelement für das Nachschärfen und/oder für das Auswechseln entsprechend weit ausserhalb der Garnituren und ausserhalb eines der Stirnwände der Karde bildenden Kardenflansches führen.

17. Vorrichtung nach Anspruch 16,
dadurch gekennzeichnet, dass die Führungen (15,52) derart sind, dass das Nachschärfen auf beiden Seiten der Garnitur durchführbar ist.

18. Vorrichtung nach Anspruch 1,
dadurch gekennzeichnet, dass nach dem Schleifelement (20.1), in Drehrichtung des Tambours (1) gesehen, eine Magnetplatte (76) vorgesehen ist.

19. Vorrichtung nach Anspruch 1,
dadurch gekennzeichnet, dass nach dem Schleifelement (20, 20.1), in Drehrichtung des Tambours (1) gesehen, eine Absaugdüse (65) vorgesehen ist.

20. Vorrichtung nach Anspruch 16,
dadurch gekennzeichnet, dass die Absaugdüse (65) durch eine steuerbare Klappe (60, 70) verschliessbar ist.

21. Vorrichtung nach Anspruch 15,
dadurch gekennzeichnet, dass die rotierende Walze (35) an einem Träger drehbar angeordnet ist, welcher seinerseits in einem Führungselement (37) derart geführt ist, dass die rotierende Walze (35) senkrecht zur Oberfläche des Schleifelementes (20,20.1) bewegbar ist und dass Mittel (80,81,82,83,84) vorgesehen sind, mittels welcher der Hubweg des Trägers (36) gemessen und als Signal an eine Steuerung abgegeben wird zwecks Unterbrechung des Schleifvorganges und/oder Alarmierung des Bedienungspersonals nach Erreichen einer vorgegebenen Abnützung des Schleifelementes (20,20.1).

22. Vorrichtung nach Anspruch 15,
dadurch gekennzeichnet, dass die rotierende Walze (35) drehbar an einem Träger (36.1) vorgesehen ist, welcher mittels einer Spindel (42), die in einem Führungselement (37.1) in einem Gegengewinde geführt ist, senkrecht zur Oberfläche des Schleifelementes (20,20.1) bewegbar angeordnet ist, dass eine mit der Spindel (42) verbundene Motorenwelle (90) eines Motors (41) mit einem Impulsrad (91) versehen ist, und dass dem Impulsrad (91) gegenüber ein Impulszähler (92) angeordnet ist, der die Impulse des Impulsrades zählt und via einer Verbindungsleitung (93) einer Steuerung zustellt, welche den Schleifvorgang unterbricht und/oder das Bedienungspersonal nach einer vorgegebenen Anzahl Impulse warnt, welche dem Erreichen einer vorgegebenen Abnützung des Schleifelementes (20,20.1) entspricht.

## Claims

1. An apparatus for grinding clothings which are placed on a roller (1) such as a main cylinder, a licker-in or a doffing cylinder or on a revolving flat of a card, comprising a grinding element (20, 20.1) which is movable substantially at a right angle towards the direction of movement of the clothings over the entire width of the cylinder clothings and which is taken up by a carrier, preferably a carriage (9, 9.1), guided in guiding means, with the carrier (9, 9.1) being moved for the said movement of the grinding element by driving means (16, 16.1; 17, 17.1) over the clothings, characterized in that the driving means is a flexible drive belt (16, 16.1; 17, 17.1) guided respectively in guide means (18, 18.1; 19), which belt is connected thereto for the said movement of the grinding element (20, 20.1) over the clothings (2) and that the inner guiding means (19) comprises a rigid guiding element (19.2) which is opposite of the main cylinder and a guiding element (140, 141, 151, 153, 156) which forms a linear sealing and is in contact with the drive belt (17.1) in the idle position, but is situated on the opposite side of the drive belt, and that the guiding element is movable by means of a pressure means (142, 155) from the idle position to the operating position in which said guiding element is no longer in contact with the drive belt (17.1).

2. An apparatus as claimed in claim 1, characterized in that the movable guiding element comprises a pretensioned power leg (14.1, 150, 154) and a pressure leg (141, 151, 153) provided thereon which by means of the power leg exerts a sealing force directed against the drive belt 17.1 forming the idle position.

3. An apparatus as claimed in claim 2, characterized in that between the pressing leg (141, 153) and the drive belt (17.1) there is provided a linear sealing element (140, 156) which extends over the whole width of the main cylinder (1).

4. An apparatus as claimed in claim 2, characterized in that the pressing leg (151) forms a linear sealing element which extends over the whole width of the main cylinder (1).

5. An apparatus as claimed in claim 2, characterized in that the pressing means is a pressure tube (142, 155) which is expansible over its cross section and which causes in the pressurized condition on the power leg (141.1, 150) a movement towards the operational condition due to the expansion in the cross section.

6. An apparatus as claimed in claim 1, characterized in that the drive belt (16, 16.1; 17, 17.1) is connected with the carriage (9, 9.1) in such a manner and the guiding means (18, 18.1; 19) are arranged in such a manner that the drive belt and the grinding element (20, 20.1) jointly substantially seal the space directly below the clothings, i.e., the space directly in front of the grinding element, as seen in a direction from the clothings, against the space behind the grinding element.

7. An apparatus as claimed in claim 6, characterized in that the drive belt is provided with a coat behind and in front of the grinding element in the direction of movement of the drive belt, which coat substantially fills the space between the clothings and the drive belt.

8. An apparatus as claimed in claim 1, characterized in that the guiding means of the drive belt are connected to air inlet openings (43), through which compressed air is blown in from a compressed air source.

9. An apparatus as claimed in claim 8, characterized in that the guiding surfaces of the drive belt guiding means are provided with grooves (46) which are arranged substantially at a right angle to the direction of movement of the drive belt and which extend substantially over the whole width, directed in the same direction, of the support of the drive belt on the guiding surfaces.

10. An apparatus as claimed in claim 1, characterized in that the grinding element is pressed by at least one pressing means, preferably a spring (21, 23), against the clothings.

11. An apparatus as claimed in claim 1, characterized in that the grinding element is connected to the carriage by means of a leaf spring (13, 13.1), with the leaf spring being provided with a bridge arranged between the carriage and the grinding element over the substantially freely movable grinding element, the width (H) of which is a fraction of the length of the grinding element, as seen in the direction of movement of the grinding element.

12. An apparatus as claimed in claim 1, characterized in that a resharpening element is provided on the cylinder for resharpening the grinding element.

13. An apparatus as claimed in claim 12, characterized in that a so-called diamond rake (31) is provided at the edge of the cylinder outside of the clothings as a resharpening element.

14. An apparatus as claimed in claim 1, characterized in that for resharpening the grinding element a resharpening element is provided which is rotational at a fixed location.

15. An apparatus as claimed in claim 14, characterized in that a rotating roller (35) coated with diamond dust is provided outside of the cylinder as a resharpening element.

16. An apparatus as claimed in claim 13, characterized in that additional guiding means (15, 52) are provided in such a way that said guiding means guide the grinding element for resharpening and/or for changing respectively far outside of the clothings and outside of a card flange forming the front walls of the card.

17. An apparatus as claimed in claim 16, characterized in that the guiding means (15, 52) are provided in such a way that the resharpening can be carried out on either side of the clothing.

18. An apparatus as claimed in claim 1, characterized in that a magnetic plate (76) is provided behind the grinding element (20.1), as seen in the direction of rotation of the main cylinder (1).

19. An apparatus as claimed in claim 1, characterized in that a suction nozzle (65) is provided behind the grinding element (20, 20.1), as seen in the direction of rotation of the main cylinder (1).

20. An apparatus as claimed in claim 16, characterized in that the suction nozzle (65) is closeable by means of a controllable flap (60, 70).

21. An apparatus as claimed in claim 15, characterized in that the rotating roller (35) is rotationally arranged on a carrier which is guided in a guiding element (37) in such a way that the rotating roller (35) is vertically movable with respect to the surface of the grinding element (20, 20.1) and that means (80, 81, 82, 83, 84) are provided, by means of which the stroke of the carrier (36) can be measured and supplied as a signal to a control unit for the purpose of interrupting the grinding process and/or alarming the operating staff after a predefined amount of wear in the grinding element (20, 20.1) has been reached.

22. An apparatus as claimed in claim 15, characterized in that the rotating roller (35) is provided rotationally on a carrier (36.1) which is movably guided by means of a spindle (42), which is guided in a guiding element (37.1) in a counterthread, vertical to the surface of the grinding element (20, 20.1), and that a motor shaft (90) of a motor (41) connected to the spindle (42) is provided with an impulse wheel (91) and that opposite the impulse wheel (91) there is provided an impulse counter (92) which counts the impulses of the impulse wheel and which notifies a control unit thereof via a connecting line (93), which control unit interrupts the grinding process and/or alarms the operating staff after a predefined number of impulses which is equivalent to reaching a predefined amount of wear in the grinding element (20, 20.1).

## Revendications

1. Dispositif servant à aiguiser des garnitures qui sont montées sur un rouleau (1), par exemple sur un tambour, un briseur ou un rouleau peigneur, ou sur un chapeau balladeur d'une carde, avec un élément aiguiseur (20, 20.1), mobile sur toute la largeur des garnitures de tambour, essentiellement à angle droit par rapport à la direction de mouvement des garnitures, élément aiguiseur qui est réceptionné par un entraîneur, de préférence un coulisseau (9, 9.1), guidé dans des guidages, et où, pour ladite mise en mouvement de l'élément aiguiseur, l'entraîneur (9, 9.1) est mû au-dessus des garnitures par un moyen d'entraînement (16, 16.1; 17, 17.1),
caractérisé par le fait que
le moyen d'entraînement est une bande d'entraînement flexible (16, 16.1; 17, 17.1) guidée en correspondance dans des guidages (18, 18.1; 19), laquelle, pour ladite mise en mouvement de l'élément aiguiseur (20, 20.1) au-dessus des garnitures (2), est reliée avec celui-ci, et que le guidage intérieur (19) comprend une partie de guidage rigide (19.2) disposée en face du tambour, et une partie de guidage (140, 141, 151, 153, 156) s'appliquant, au repos, contre la bande d'entraînement (17.1), se trouvant cependant sur la face opposée de la bande d'entraînement, formant ainsi une étanchéité linéaire, et que, a l'aide d'un moyen de pression (142, 155), la partie de guidage peut être mise en mouvement, depuis l'état de repos, dans un état de fonctionnement dans lequel cette partie de guidage ne repose plus contre la bande d'entraînement (17.1).

2. Dispositif selon revendication 1,
caractérisé par le fait que
la partie de guidage mobile comprend une jambe de force précontrainte (141.1, 150, 154) et une jambe d'appui (141, 151, 153) prévue sur celle-ci, jambe d'appui qui, à l'aide de la jambe de force, exerce une force d'étanchéité dirigée contre la bande d'entraînement (17.1) et formant l'état de repos.

3. Dispositif selon revendication 2,
caractérisé par le fait
qu'un élément d'étanchéité linéaire (140, 156) est prévu entre la jambe d'appui (141, 153) et la bande d'entraînement (17.1), qui s'étend sur toute la largeur du tambour (1).

4. Dispositif selon revendication 2,
caractérisé par le fait que
la jambe d'appui (151) forme un élément d'étanchéité linéaire qui s'étend sur toute la largeur du tambour (1).

5. Dispositif selon revendication 2,
caractérisé par le fait que
le moyen de pression est un tuyau de pression (142, 155) extensible en section, lequel, par suite d'un élargissement en section lorsqu'il est en état de pression, provoque sur la jambe de force (141.1, 150, 154) un mouvement vers l'état de fonctionnement.

6. Dispositif selon revendication 1,
caractérisé par le fait que
la bande d'entraînement (16, 16.1; 17, 17.1) est reliée de telle sorte avec le coulisseau (9, 9.1), et les guidages (18, 18.1; 19) sont disposés de telle manière, que la bande d'entraînement et l'élément aiguiseur (20, 20.1) rendent conjointement essentiellement étanche l'espace situé immédiatement sous les garnitures, c'est-à-dire l'espace situé immédiatement devant l'élément aiguiseur, vu depuis les garnitures, face à l'espace situé derrière l'élément aiguiseur.

7. Dispositif selon revendication 6,
caractérisé par le fait que,
vu dans la direction de mouvement de la bande d'entraînement, la bande d'entraînement est pourvue, avant et après l'élément aiguiseur, d'un revêtement qui remplit essentiellement l'espace situé entre les garnitures et la bande d'entraînement.

8. Dispositif selon revendication 1,
caractérisé par le fait que
les guidages de la bande d'entraînement sont reliés avec des ouvertures d'entrée d'air (43), au travers desquelles de l'air comprimé est insufflé depuis une source d'air comprimé.

9. Dispositif selon revendication 8,
caractérisé par le fait que
les surfaces de guidage du guidage de la bande d'entraînement sont pourvues de cannelures (46) qui sont disposées essentiellement à angle droit par rapport à la direction de mouvement de la bande d'entraînement, et qui s'étendent essentiellement sur toute la largeur, dirigée dans la même direction, de l'appui de la bande d'entraînement sur les surfaces de guidage.

10. Dispositif selon revendication 1,
caractérisé par le fait que
l'élément aiguiseur est pressé contre les garnitures par au moins un moyen de pression, de préférence un ressort (21, 23).

11. Dispositif selon revendication 1,
caractérisé par le fait que
l'élément aiguiseur est relié avec le coulisseau à l'aide d'un ressort à lame (13, 13.1) qui possède une nervure s'étendant sur l'élément aiguiseur mobile d'une manière largement libre, située entre le coulisseau et l'élément aiguiseur, et dont la largeur (H) présente une fraction de la longueur de l'élément aiguiseur, vu dans la direction de mouvement de l'élément aiguiseur.

12. Dispositif selon revendication 1,
caractérisé par le fait
qu'un élément rectificateur est prévu près du tambour, pour rectifier l'élément aiguiseur.

13. Dispositif selon revendication 12,
caractérisé par le fait
qu'un râteau diamanté (31) ainsi appelé est prévu comme élément rectificateur, sur le bord du tambour, hors des garnitures.

14. Dispositif selon revendication 1,
caractérisé par le fait
qu'un élément rectificateur, tournant dans un lieu fixe, est prévu pour rectifier l'élément aiguiseur.

15. Dispositif selon revendication 14,
caractérisé par le fait
qu'un rouleau rotatif (35), garni de poussières de diamant, est prévu comme élément rectificateur, hors du tambour.

16. Dispositif selon revendication 13,
caractérisé par le fait que,
pour la rectification et/ou pour l'échange de l'élémement aiguiseur, des guidages supplémentaires (15, 52) sont prévus de telle manière que ceux-ci guident l'élément aiguiseur d'une manière éloignée correspondante hors des garnitures et hors d'une des flasques de carde formant les parois latérales de la carde.

17. Dispositif selon revendication 16,
caractérisé par le fait que
les guidages (15, 52) sont tels que la rectification peut être réalisée sur les deux côtés de la garniture.

18. Dispositif selon revendication 1,
caractérisé par le fait
qu'une plaque magnétique (76) est prévue après l'élément aiguiseur (20.1), vu dans le sens de rotation du tambour (1).

19. Dispositif selon revendication 1,
caractérisé par le fait
qu'une buse d'aspiration (65) est prévue après l'élément aiguiseur (20, 20.1), vu dans le sens de rotation du tambour (1).

20. Dispositif selon revendication 16,
caractérisé par le fait que
la buse d'aspiration (65) peut être fermée par un clapet (60, 70) pouvant être asservi.

21. Dispositif selon revendication 15,
caractérisé par le fait que
le rouleau rotatif (35) est disposé d'une manière rotative sur un porteur qui, de son côté, est guidé dans un élément de guidage (37), de telle manière que le rouleau rotatif (35) peut être mis en mouvement perpendiculairement à la surface de l'élément aiguiseur (20, 20.1), et que des moyens (80, 81, 82, 83, 84) sont prévus, à l'aide desquels la course du porteur (36) est mesureé et transmise comme signal à un asservissement, dans le but d'interrompre le processus d'aiguisage et/ou d'alerter le personnel de service, après qu'une usure prédéterminée de l'élément aiguiseur (20, 20.1) soit atteinte.

22. Dispositif selon revendication 15,
caractérisé par le fait que
le rouleau rotatif (35) est prévu d'une manière rotative sur un porteur (36.1) qui est disposé pour être mobile d'une manière perpendiculaire à la surface de l'élément aiguiseur (20, 20.1), à l'aide d'une broche (42) qui est guidée dans un filetage à sens inverse, dans un élément de guidage (37.1), qu'un arbre de moteur (90) d'un moteur (41), relié avec la broche (42), est équipé d'une roue à impulsions (91), et qu'un compteur d'impulsions (92) est disposé vis-à-vis de la roue à impulsions (91), lequel compte les impulsons de la roue à impulsions et les délivre à un asservissement, via une conduite de liaison (93), asservissement qui interrompt le processus d'aiguisage et/ou prévient le personnel de service, après un nombre prédéterminé d'impulsions qui correspond à une usure prédéterminée et atteinte de l'élément aiguiseur (20, 20.1).
